(19) Europäisches Patentamt / European Patent Office / Office européen des brevets

(11) **EP 2 831 991 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(51) Int Cl.:
*H02M 5/45* *(2006.01)*    *H02M 5/458* *(2006.01)*

(21) Anmeldenummer: **12725826.7**

(22) Anmeldetag: **06.06.2012**

(86) Internationale Anmeldenummer:
**PCT/EP2012/060754**

(87) Internationale Veröffentlichungsnummer:
**WO 2013/143623 (03.10.2013 Gazette 2013/40)**

(54) **VERFAHREN ZUM BETRIEB EINER UMRICHTERSCHALTUNG**

METHOD FOR OPERATING A CONVERTER CIRCUIT

PROCÉDÉ POUR FAIRE FONCTIONNER UN CIRCUIT CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2012 EP 12161763**

(43) Veröffentlichungstag der Anmeldung:
**04.02.2015 Patentblatt 2015/06**

(73) Patentinhaber: **ABB Technology AG**
**8050 Zürich (CH)**

(72) Erfinder:
 • **MAIBACH, Philippe**
  **CH-5037 Muhen (CH)**
 • **SCHAAD, Thomas**
  **CH-4538 Oberbipp (CH)**
 • **WILLOMITZER, Marc**
  **CH-5416 Kirchdorf (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**EP-A2- 0 367 247       EP-A2- 2 214 302**
**DE-A1-102010 025 647     DE-A1-102011 113 055**
**US-A1- 2008 031 024**

## Beschreibung

### Technisches Gebiet

Die Erfindung bezieht sich auf das Gebiet der Leistungselektronik. Sie geht aus von einem Verfahren zum Betrieb einer Umrichterschaltung gemäss dem Oberbegriff des unabhängigen Anspruchs.

### Stand der Technik

Heute werden Umrichterschaltungen in einer Vielzahl an Anwendungen eingesetzt. Eine solche Umrichterschaltung weist beispielsweise eine Gleichrichtereinheit auf, an deren Wechselspannungsseite ein erstes elektrisches Wechselspannungsnetz über eine netzseitige Impedanz angeschlossen ist. Die netzseitige Impedanz kann eine Induktivität oder ein Transformator sein. Desweiteren umfasst die Umrichterschaltung einen kapazitiven Energiespeicherkreiskreis, der mit der Gleichspannungsseite der Gleichrichtereinheit verbunden ist. Die Gleichrichtereinheit weist eine Vielzahl an ansteuerbaren und nicht-ansteuerbaren Leistungshalbleiterschaltern auf und erlaubt einen Vierquadrantenbetrieb. Ferner weist die Umrichterschaltung eine Wechselrichtereinheit, an deren Gleichspannungsseite der kapazitive Energiespeicherkreis verbunden ist und anderen Wechselspannungsseite eine lastseitige Im-pedanz verbunden ist, die als eine Induktivität oder als ein Transformator ausgebildet sein kann. Die Wechselrichtereinheit weist eine Vielzahl an ansteuerbaren und nicht-ansteuerbaren Leistungshalbleiterschaltern auf und erlaubt einen Vierquadrantenbetrieb. Typischerweise ist an die lastseitige Impedanz ein zweites elektrisches Wechselspannungsnetz angeschlossen, mit welchem typischerweise eine elektrische Last verbunden ist.

Beim Betrieb der Umrichterschaltung werden die ansteuerbaren Leistungshalbleiterschalter der Gleichrichtereinheit durch ein Gleichrichterschaltsignal angesteuert. Die ansteuerbaren Leistungshalbleiterschalter der Wechselrichtereinheit werden durch ein Wechselrichterschaltsignal angesteuert. Das Gleichrichterschaltsignal und das Wechselrichterschaltsignal werden in einer Umrichteransteuereinheit erzeugt. Ist eine elektrische Last mit dem zweiten elektrischen Wechselspannungsnetz verbunden und soll diese elektrische Last vom ersten elektrischen Wechselspannungsnetz gespeist werden, so generiert die Umrichteransteuereinheit ein Gleichrichterschaltsignal und ein Wechselrichterschaltsignal entsprechend den Anforderungen zur Speisung der elektrischen Last.

Soll während des Betriebes der Umrichterschaltung die elektrische Last nicht mit elektrischer Energie versorgt werden, d.h. keine oder nahezu keine Wirkleistung an die elektrische Last abgegeben werden, so wird üblicherweise dennoch von der Umrichteransteuereinheit ein Gleichrichterschaltsignal nach einer Schaltsequenz derart erzeugt, dass die Spannung über dem kapazitiven Energiespeicherkreis auf einem vorgebbaren Wert gehalten wird. Desweiteren erzeugt die Umrichteransteuereinheit in diesem Zustand der Umrichterschaltung ein Wechselrichterschaltsignal nach einer Schaltsequenz derart, dass die für das zweite elektrische Wechselspannungsnetz geforderte Blindleistung eingespeist wird.

Problematisch bei dem Betrieb der Umrichterschaltung im vorstehend beschriebenen lastlosen Zustand ist, dass durch das Schalten der ansteuerbaren Leistungshalbleiterschalter nach dem Gleichrichterschaltsignal in der Gleichrichtereinheit Schaltverluste und damit auch Verluste in der netzseitigen Impedanz auftreten, die nicht tolerierbar sind.

Die EP 2 214 302 A2 offenbart ein Verfahren zum Betrieb einer Umrichterschaltung mit einem Gleichrichter und einem Wechselrichter, der eine rotierende elektrische Maschine antreibt. Bei geringer Last wird der Gleichrichter nicht angesteuert. Die Zwischenkreisspannung und der Ausgangsstrom werden zwar gemessen, jedoch nicht die Ausgangsspannung und Steuersignale aus der angetriebenen Maschine ausgewertet.

Die US 2008/0031024 offenbart eine Umrichterschaltung mit mehreren Modulen mit Steuerbaren umrichtern. Im Falle geringer Last werden einzelne Gleichrichter nicht angesteuert.

### Darstellung der Erfindung

Aufgabe der Erfindung ist es deshalb, ein Verfahren zum Betrieb einer Umrichterschaltung anzugeben, durch welches Verluste der Umrichterschaltung im Falle, dass die Umrichterschaltung keine oder nahezu keine Wirkleistung an eine elektrische Last abgibt, verringert werden können. Diese Aufgabe wird durch die Merkmale des Anspruchs 1. In den abhängigen Ansprüchen sind vorteilhafte Weiterbildungen der Erfindung angegeben.

Beim erfindungsgemässen Verfahren zum Betrieb einer Umrichterschaltung umfasst die Umrichterschaltung eine Gleichrichtereinheit mit einer Vielzahl an ansteuerbaren und nicht-ansteuerbaren Leistungshalbleiterschaltern, wobei an der Wechselspannungsseite der Gleichrichtereinheit ein erstes elektrisches Wechselspannungsnetz über eine netzseitige Impedanz angeschlossen ist. Die Umrichterschaltung umfasst ferner einen kapazitiven Energiespeicherkreis, der mit der Gleichspannungsseite der Gleichrichtereinheit verbunden ist, und eine Wechselrichtereinheit mit einer Vielzahl an ansteuerbaren und nicht-ansteuerbaren Leistungshalbleiterschaltern, wobei der kapazitive Energiespeicherkreiskreis mit der Gleichspannungsseite der Wechselrichtereinheit verbunden ist und an der Wechselspannungsseite der Wechselrichtereinheit ein zweites elektrisches Wechselspannungsnetz über eine lastseitige Impedanz angeschlossen ist. Verfahrensmässig werden die ansteuerbaren Leistungshalbleiterschalter der Gleichrichtereinheit mittels eines Gleichrichterschaltsignals angesteuert. Desweiteren werden die ansteuerbaren Leistungshalbleiterschalter der Wechselrichtereinheit mittels eines Wechselrichterschaltsignals angesteuert werden. Das Verfahren nach der Erfindung ist dadurch gekennzeichnet,
dass

(a) die Spannung über dem kapazitiven Energiespeicherkreis fortlaufend ermittelt wird,
(b) ein Wirkleistungsistwert auf der Wechselspannungsseite der Wechselrichtereinheit fortlaufend ermittelt wird,
(c) ein Blindleistungsistwert auf der Wechselspannungsseite der Wechselrichtereinheit fortlaufend ermittelt wird, und dass, falls
(d) die Spannung über dem kapazitiven Energiespeicherkreis innerhalb eines vorgebbaren Bereichs liegt und
(e) der Wirkleistungsistwert auf der Wechselspannungsseite der Wechselrichtereinheit unterhalb eines vorgebbaren Wertes liegt und/oder der Blindleistungsistwert

im wesentlichen einem vorgebbaren Blindleistungssollwert entspricht, das Gleichrichterschaltsignal blockiert wird, um die ansteuerbaren Leistungshalbleiterschalter der Gleichrichtereinheit abzuschalten.

Durch das Blockieren des Gleichrichterschaltsignals zur Abschaltung der ansteuerbaren Leistungshalbleiterschalter der Gleichrichtereinheit, falls die Bedingungen (d) und (e) erfüllt sind, finden keine Schalthandlungen der ansteuerbaren Leistungshalbleiterschalter der Gleichrichtereinheit statt, wodurch vorteilhaft Verluste der Umrichterschaltung im Falle, dass die Umrichterschaltung keine oder nahezu keine Wirkleistung an eine elektrische Last abgibt, verringert oder sogar nahezu ganz vermieden werden können. Das erfindungsgemässe Verfahren zum Betrieb einer Umrichterschaltung ist damit insgesamt äusserst einfach zu realisieren.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1    eine erste Ausführungsform einer Umrichterschaltung,

Fig. 2    eine zweite Ausführungsform einer Umrichterschaltung und

Fig. 3    ein Ersatzschaltbild der Lastseite der Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

Wege zur Ausführung der Erfindung

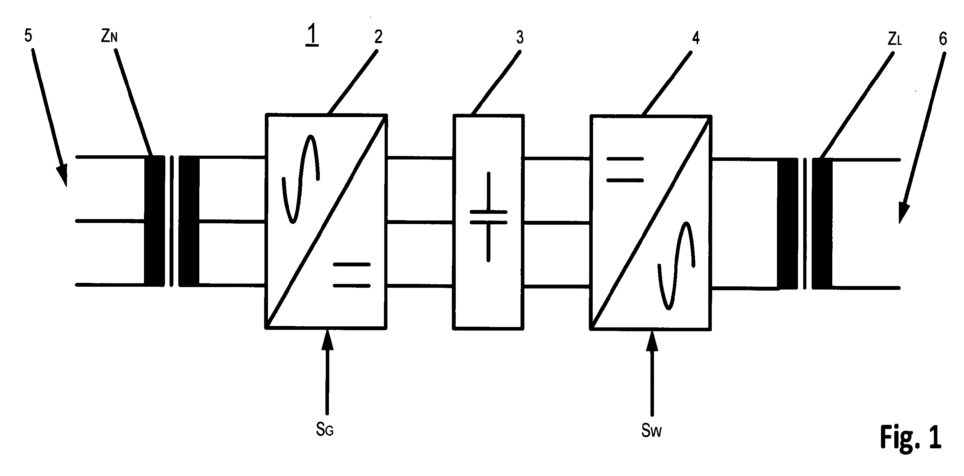

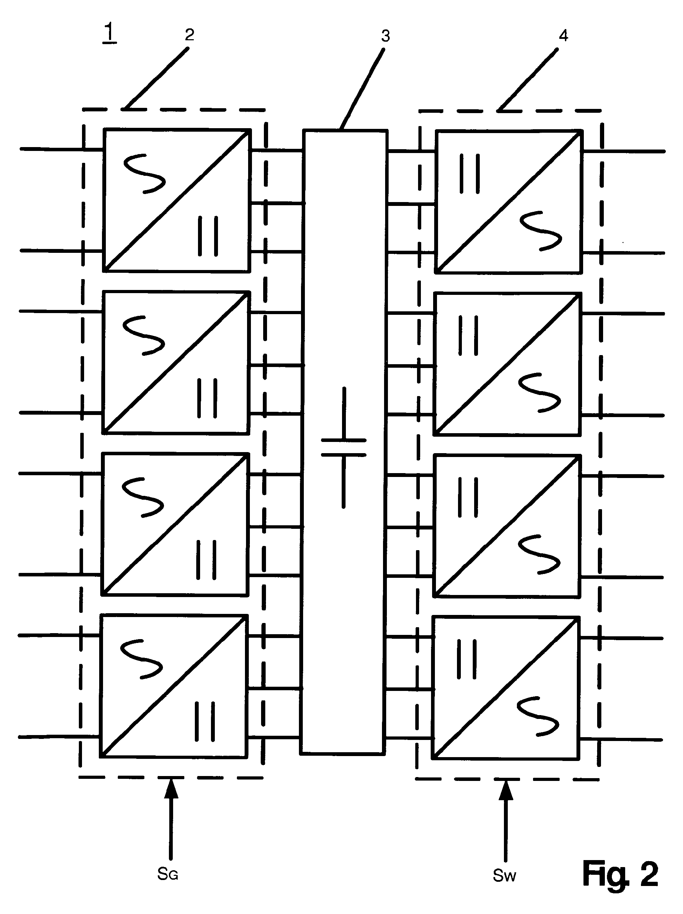

In Fig. 1 ist eine erste Ausführungsform einer Umrichterschaltung 1 gezeigt. Fig. 2 zeigt eine zweite Ausführungsform einer Umrichterschaltung 1. Allgemein umfasst die Umrichterschaltung eine Gleichrichtereinheit 2 mit einer Vielzahl an ansteuerbaren und nicht-ansteuerbaren Leistungshalbleiterschaltern, wobei an der Wechselspannungsseite der Gleichrichtereinheit 2 ein erstes elektrisches Wechselspannungsnetz 5 über eine netzseitige Impedanz $Z_N$ angeschlossen ist, wie beispielhaft in Fig. 1 dargestellt. Die netzseitige Impedanz $Z_N$ ist in Fig. 2 der Übersichtlichkeit halber nicht gezeigt. Ferner umfasst die Umrichterschaltung 1 allgemein einen kapazitiven Energiespeicherkreis 3, der mit der Gleichspannungsseite der Gleichrichtereinheit 2 verbunden ist. Allgemein umfasst der kapazitive Energiespeicherkreis 3 mindestens einen Kondensator. Darüber hinaus weist die Umrichterschaltung 1 eine Wechselrichtereinheit 4 mit einer Vielzahl an ansteuerbaren und nicht-ansteuerbaren Leistungshalbleiterschaltern, wobei der kapazitive Energiespeicherkreiskreis 3 mit der Gleichspannungsseite der Wechselrichtereinheit 4 verbunden ist und an der Wechselspannungsseite der Wechselrichtereinheit 4 ein zweites elektrisches Wechselspannungsnetz 6 über eine lastseitige Impedanz $Z_L$ angeschlossen ist, wie beispielhaft in Fig. 1 dargestellt. Die lastseitige Impedanz $Z_L$ ist in Fig. 2 der Übersichtlichkeit halber nicht gezeigt.

Der jeweilige ansteuerbare Leistungshalbleiterschalter der Gleichrichtereinheit 2 und der Wechselrichtereinheit 4 kann als Abschaltthyristor (GTO - Gate Turn-Off Thyristor) oder als integrierter Thyristor mit kommutierter Ansteuerelektrode (IGCT - Integrated Gate Commutated Thyristor) ausgebildet sein. Es ist aber auch denkbar einen vorstehend genannten ansteuerbaren Leistungshalbleiterschalter beispielsweise als Leistungs-MOSFET oder als Bipolartransistor mit isoliert angeordneter Gateelektrode (IGBT) auszubilden. Desweiteren ist der jeweilige nicht-ansteuerbare Leistungshalbleiterschalter der Gleichrichtereinheit 2 und der Wechselrichtereinheit 4 vorzugsweise als Diode ausgebildet. Vorteilhaft ist zu jedem ansteuerbaren Leistungshalbleiterschalter ein nicht-ansteuerbarer Leistungshalbleiterschalter antiparallel geschaltet, so dass ein bidirektionaler Leistungshalbleiterschalter mit gesteuerter unidirektionaler Stromführungsrichtung gebildet wird. Die Gleichrichtereinheit 2 und die Wechselrichtereinheit 4 kann dann mit solchen bidirektionalen Leistungshalbleiterschaltern beispielsweise als Brückenschaltung realisiert werden, wobei jedwede dem Fachmann bekannte Verschaltung zur Realisierung der Gleichrichtereinheit 2 und der Wechselrichtereinheit 4 denkbar ist.

Beim Verfahren zum Betrieb der Umrichterschaltung werden nun die ansteuerbaren Leistungshalbleiterschalter der Gleichrichtereinheit 2 mittels eines Gleichrichterschaltsignals $S_G$ angesteuert, wie dies in Fig. 1 und Fig. 2 angedeutet ist. Zudem werden die ansteuerbaren Leistungshalbleiterschalter der Wechselrichtereinheit 4 mittels eines Wechselrichterschaltsignals $S_W$ angesteuert, wie dies ebenfalls in Fig. 1 und Fig. 2 angedeutet ist. Das Gleichrichterschaltsignal $S_G$ und das Wechselrichterschaltsignal $S_W$ werden in einer Umrichteransteuereinheit erzeugt, die der Übersichtlichkeit halber in Fig. 1 und Fig. 2 nicht dargestellt ist.

Nach dem erfindungsgemässen Verfahren zum Betrieb der Umrichterschaltung 1 wird nun

(a) die Spannung $U_{DC}$ über dem kapazitiven Energiespeicherkreis 3 fortlaufend ermittelt,
(b) ein Wirkleistungsistwert $P_{ist}$ auf der Wechselspannungsseite der Wechselrichtereinheit 4 fortlaufend ermittelt
(c) ein Blindleistungsistwert $Q_{ist}$ auf der Wechselspannungsseite der Wechselrichtereinheit 4 fortlaufend ermittelt.

Das Gleichrichterschaltsignal $S_G$ wird blockiert, um die ansteuerbaren Leistungshalbleiterschalter der Gleichrichtereinheit 2 abzuschalten, falls

(d) die Spannung $U_{DC}$ über dem kapazitiven Energiespeicherkreis 3 innerhalb eines vorgebbaren Bereichs liegt und
(e) der Wirkleistungsistwert $P_{ist}$ auf der Wechselspannungsseite der Wechselrichtereinheit 4 unterhalb eines vorgebbaren Wertes liegt und/oder der Blindleistungsistwert $Q_{ist}$ im wesentlichen einem vorgebbaren Blindleistungssollwert $Q_{soll}$ entspricht.

Durch das Blockieren des Gleichrichterschaltsignals $S_G$ zur Abschaltung der ansteuerbaren Leistungshalbleiterschalter der Gleichrichtereinheit 2, falls die Bedingungen (d) und (e) erfüllt sind, finden keine Schalthandlungen der ansteuerbaren Leistungshalbleiterschalter der Gleichrichtereinheit 2 statt, so dass vorteilhaft Verluste der Umrichterschaltung 1 im Falle, dass die Umrichterschaltung 1 keine oder nahezu keine Wirkleistung an eine elektrische Last abgibt, verringert oder sogar nahezu ganz vermieden werden können. Um in diesem Zustand der Umrichterschaltung 1 eine vom zweiten elektrischen Wechselspannungsnetz 6 geforderte Blindleistung aus dem kapazitiven Energiespeicherkreis 3 in das zweite elektrische Wechselspannungsnetz 6 einspeisen zu können, wird ein Wechselrichterschaltsignal $S_W$ nach einer entsprechenden Schaltsequenz erzeugt, wobei die ansteuerbaren Leistungshalbleiterschalter der Wechselrichtereinheit 4 dann nach diesem Wechselrichterschaltsignal $S_W$ schalten. Der kapazitive Energiespeicherkreis 3 wird dabei durch die nicht-ansteuerbaren Leistungshalbleiterschalter der Gleichrichtereinheit 2 aus dem ersten Wechselspannungsnetz 5 nachgeladen. Im blockierten Zustand der ansteuerbaren Leistungshalbleiterschalter der Gleichrichtereinheit 2 ist es also vorteilhaft möglich, vom zweiten elektrischen Wechselspannungsnetz 6 geforderte Blindleistung aus dem ersten Wechselspannungsnetz 5 über den kapazitiven Energiespeicherkreis in das zweite elektrische Wechselspannungsnetz 6 einzuspeisen.

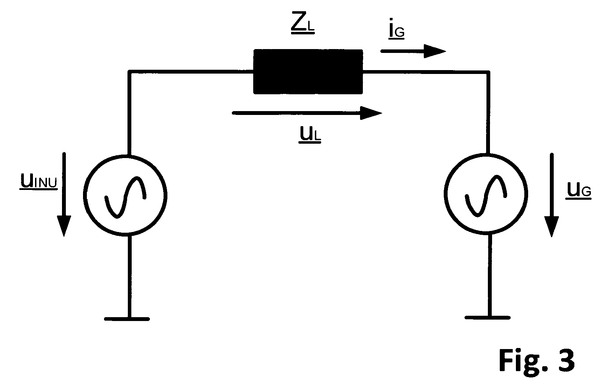

In Fig. 3 ist ein Ersatzschaltbild der Lastseite der Umrichterschaltung 1 dargestellt, wobei sämtliche Grössen komplex dargestellt sind und $u_{INU}$ die Spannung an der Wechselspannungsseite der Wechselrichtereinheit 4 ist, $u_L$ die Spannung über der lastseitigen Impedanz $Z_L$ ist, $i_G$ der Strom durch die lastseitige Impedanz $Z_L$ ist und $u_G$ die Spannung des zweiten elektrischen Wechselspannungsnetzes 6 ist. Aus Fig. 3 ergeben sich somit folgende Zusammenhänge:

$$\underline{u}_L = \underline{i}_G \cdot \underline{Z}_L \qquad\qquad [1]$$

$$\underline{u}_{INU} = \underline{u}_L + \underline{u}_G \qquad\qquad [2]$$

wobei $u_{INU}$ vorzugsweise gemessen wird und $|u_{INU}| \sim U_{DC}$ (Spannung über dem kapazitiven Energiespeicherkreis 3) ist. Ferner wird die Spannung $U_{DC}$ über dem kapazitiven Energiespeicherkreis 3 vorzugsweise durch Messen ermittelt.
Der Wirkleistungsistwert $P_{ist}$ auf der Wechselspannungsseite ergibt sich somit zu

$$P_{ist}=Re\{\underline{u}_G \cdot \underline{i}_G{}^*\} \qquad\qquad [3]$$

und der Blindleistungsistwert $Q_{ist}$ auf der Wechselspannungsseite ergibt sich dann zu

$$Q_{ist}=Im\{\underline{u}_G \cdot \underline{i}_G{}^*\} \qquad\qquad [4]$$

Mittels der Formeln [3] und [4] lässt sich der Wirkleistungsistwert $P_{ist}$ und der Blindleistungsistwert $Q_{ist}$ auf sehr einfache Weise durch Berechnung ermitteln. Die Berechnung des Wirkleistungsistwertes $P_{ist}$ und des Blindleistungsistwertes $Q_{ist}$ erfolgt mit Vorteil in der Umrichteransteuereinheit, wobei der Umrichteransteuereinheit die für die Berechnung notwendigen Grössen zugeführt sind.

Es hat sich als vorteilhaft erwiesen, dass, falls die Bedingungen (d) und (e) erfüllt sind, die vorstehend genannte Blockierung des Gleichrichterschaltsignals $S_G$ nach einer einstellbaren Zeitdauer erfolgt. Diese einstellbare Zeitdauer verhindert vorteilhaft, dass die vorstehend genannte Blockierung des Gleichrichterschaltsignals $S_G$ sofort bei Erfüllung der Bedingungen (d) und (e) erfolgt. Dadurch wird die Blockierung des Gleichrichterschaltsignals $S_G$ unempfindlich bei sich zeitlich schnell ändernden Bedingungen (d) und (e).

Ferner ist es denkbar, dass das Gleichrichterschaltsignal $S_G$ blockiert wird, um die ansteuerbaren Leistungshalbleiterschalter der Gleichrichtereinheit 2 abzuschalten, falls zusätzlich zu den Bedingungen (d) und (e) auch ein vorgebbarer Wirkleistungssollwert $P_{soll}$ unterhalb eines vorgebbaren Wertes liegt. Darüber hinaus ist es denkbar, dass das Gleichrichterschaltsignal $S_G$ blockiert wird, um die ansteuerbaren Leistungshalbleiterschalter der Gleichrichtereinheit 2 abzuschalten, falls zusätzlich zu den Bedingungen (d) und (e) auch der Blindleistungsistwert $Q_{ist}$ unterhalb eines vorgebbaren Wertes liegt.

Insgesamt ist das erfindungsgemässe Verfahren zum Betrieb einer Umrichterschaltung sehr einfach zu realisieren und damit prädestiniert für neue Anlagen und Anwendungen mit Umrichterschaltungen, aber auch zur Nachrüstung von bereits bestehenden Umrichterschaltungen.

**Bezugszeichenliste**

| | |
|---|---|
| 1 | Umrichterschaltung |
| 2 | Gleichrichtereinheit |
| 3 | kapazitiver Energiespeicherkreis |
| 4 | Wechselrichtereinheit |
| 5 | erstes elektrisches Wechselspannungsnetz |
| 6 | zweites elektrisches Wechselspannungsnetz |
| $Z_N$ | netzseitige Impedanz |
| $Z_L$ | lastseitige Impedanz |
| $S_G$ | Gleichrichterschaltsignal |
| $S_W$ | Wechselrichterschaltsignals |

**Patentansprüche**

**1.** Verfahren zum Betrieb einer Umrichterschaltung (1), bei dem die Umrichterschaltung (1) umfasst
eine Gleichrichtereinheit (2) mit einer Vielzahl an ansteuerbaren und nicht-ansteuerbaren Leistungshalbleiterschaltern, wobei an der Wechselspannungsseite der Gleichrichtereinheit (2) ein erstes elektrisches Wechselspannungsnetz (5) über eine netzseitige Impedanz ($Z_N$) angeschlossen ist,
einen kapazitiven Energiespeicherkreis (3), der mit der Gleichspannungsseite der Gleichrichtereinheit (2) verbunden ist,
eine Wechselrichtereinheit (4) mit einer Vielzahl an ansteuerbaren und nicht-ansteuerbaren Leistungshalbleiterschaltern, wobei der kapazitive Energiespeicherkreis (3) mit der Gleichspannungsseite der Wechselrichtereinheit (4) verbunden ist und an der Wechselspannungsseite der Wechselrichtereinheit (4) ein zweites elektrisches Wechselspannungsnetz (6) über eine lastseitige Impedanz ($Z_L$) angeschlossen ist,
bei dem die ansteuerbaren Leistungshalbleiterschalter der Gleichrichtereinheit (2) mittels eines Gleichrichterschaltsignals ($S_G$) angesteuert werden und die ansteuerbaren Leistungshalbleiterschalter der Wechselrichtereinheit (4) mittels eines Wechselrichterschaltsignals (Sw) angesteuert werden, wobei

(a) die Spannung ($U_{DC}$) über dem kapazitiven Energiespeicherkreis (3) fortlaufend ermittelt wird,
(b) ein Wirkleistungsistwert ($P_{ist}$) auf der Wechselspannungsseite der Wechselrichtereinheit (4) fortlaufend ermittelt wird,
(c) ein Blindleistungsistwert ($Q_{ist}$) auf der Wechselspannungsseite der Wechselrichtereinheit (4) fortlaufend ermittelt wird, und wobei

, falls
(d) die Spannung ($U_{DC}$) über dem kapazitiven Energiespeicherkreis (3) innerhalb eines vorgebbaren Bereichs liegt und
(e) der Wirkleistungsistwert ($P_{ist}$) auf der Wechselspannungsseite der Wechselrichtereinheit (4) unterhalb eines vorgebbaren Wertes liegt und/oder der Blindleistungsistwert ($Q_{ist}$) im wesentlichen einem vorgebbaren Blindleistungssollwert ($Q_{soll}$) entspricht,

das Gleichrichterschaltsignal ($S_G$) blockiert wird, um die ansteuerbaren Leistungshalbleiterschalter der Gleichrichtereinheit (2) abzuschalten.

2. Verfahren nach Anspruch 1, **dadurch gekennzeichnet, dass** die Blockierung des Gleichrichterschaltsignals ($S_G$) nach einer einstellbaren Zeitdauer erfolgt.

3. Verfahren nach Anspruch 1 oder 2, **dadurch gekennzeichnet, dass** falls zusätzlich

(f) ein vorgebbarer Wirkleistungssollwert ($P_{soll}$) unterhalb eines vorgebbaren Wertes liegt,

das Gleichrichterschaltsignal ($S_G$) blockiert wird, um die ansteuerbaren Leistungshalbleiterschalter der Gleichrichtereinheit (2) abzuschalten.

4. Verfahren nach einem der Ansprüche 1 bis 3, **dadurch gekennzeichnet, dass** falls zusätzlich

(g) der Blindleistungsistwert ($Q_{ist}$) unterhalb eines vorgebbaren Wertes liegt,

das Gleichrichterschaltsignal ($S_G$) blockiert wird, um die ansteuerbaren Leistungshalbleiterschalter der Gleichrichtereinheit (2) abzuschalten.

**Claims**

1. Method for operating a converter circuit (1), in which the converter circuit (1) comprises
a rectifier unit (2) having a multiplicity of controllable and non-controllable power semiconductor switches, wherein a first electrical AC voltage system (5) is connected via a system-side impedance ($Z_N$) to the AC voltage-side of the rectifier unit (2),
a capacitive energy storage circuit (3), which is connected to the DC voltage-side of the rectifier unit (2),
an inverter unit (4) having a multiplicity of controllable and non-controllable power semiconductor switches, wherein the capacitive energy storage circuit (3) is connected to the DC voltage-side of the inverter unit (4) and a second electrical AC voltage system (6) is connected via a load-side impedance ($Z_L$) to the AC voltage-side of the inverter unit (4),
in which the controllable power semiconductor switches of the rectifier unit (2) are controlled by means of a rectifier switch signal ($S_G$) and the controllable power semiconductor switches of the inverter unit (4) are controlled by means of an inverter switch signal ($S_W$), wherein

(a) the voltage ($U_{DC}$) across the capacitive energy storage circuit (3) is continuously determined,
(b) a real power actual value ($P_{act}$) on the AC voltage-side of the inverter unit (4) is continuously determined,
(c) a reactive power actual value ($Q_{act}$) on the AC voltage-side of the inverter unit (4) is continuously determined, and wherein
, if
(d) the voltage ($U_{DC}$) across the capacitive energy storage circuit (3) is within a predefinable range and
(e) the real power actual value ($P_{act}$) on the AC voltage-side of the inverter unit (4) is below a predefinable value and/or the reactive power actual value ($Q_{act}$) substantially corresponds to a predefinable reactive power setpoint value ($Q_{setp}$),

the rectifier switch signal ($S_G$) is blocked in order to disconnect the controllable power semiconductor switches of the rectifier unit (2).

2. Method according to Claim 1, **characterized in that** the rectifier switch signal ($S_G$) is blocked after a period of time which can be set.

3. Method according to Claim 1 or 2, **characterized in that**, if in addition

(f) a predefinable real power setpoint value ($P_{setp}$) is below a predefinable value,

the rectifier switch signal ($S_G$) is blocked in order to disconnect the controllable power semiconductor switches of the rectifier unit (2).

4. Method according to any of Claims 1 to 3,
**characterized in that**, if in addition

(g) the reactive power actual value ($Q_{act}$) is below a predefinable value,

the rectifier switch signal ($S_G$) is blocked in order to disconnect the controllable power semiconductor switches of the rectifier unit (2).

## Revendications

1. Procédé pour faire fonctionner un circuit convertisseur (1), dans lequel le circuit convertisseur (1) comprend un module redresseur (2) compotant une pluralité de commutateurs à semi-conducteurs de puissance commandables et non commandables, dans lequel, du côté à tension alternative du module redresseur (2), un premier réseau électrique à tension alternative (5) est connecté par l'intermédiaire d'une impédance côté réseau ($Z_N$), un circuit accumulateur d'énergie capacitif (3) qui est relié au côté à tension continue du module redresseur (2), un module onduleur (4) comportant une pluralité de commutateurs à semi-conducteurs commandables et non commandables, dans lequel le circuit accumulateur d'énergie capacitif (3) est relié au côté à tension continue du module onduleur (4) et un second réseau électrique à tension alternative (6) est connecté par l'intermédiaire d d'une impédance côté charge ($Z_L$) au côté à tension alternative du module onduleur (4), dans lequel les commutateurs à semi-conducteurs de puissance commandables du module redresseur (2) sont commandés au moyen d'un signal de commutation de redresseur ($S_G$) et les commutateurs à semi-conducteurs de puissance commandables du module onduleur (4) sont commandés au moyen d'un signal de commutation d'onduleur ($S_W$), dans lequel

(a) la tension ($U_{DC}$) aux bornes du circuit accumulateur d'énergie capacitif (3) est obtenue en continu,
(b) une valeur de puissance effective ($P_{ist}$) du côté à tension alternative du module onduleur (4) est obtenue en continu,
(c) une valeur de puissance réactive ($Q_{ist}$) du côté à tension alternative du module onduleur (4) est déterminée en continu, et dans lequel,
dans la cas où
(d) la tension ($U_{DC}$) aux bornes du circuit accumulateur d'énergie capacitif (3) se situe à l'intérieur d'une plage pouvant être prédéterminée et où
(e) la valeur de puissance effective ($P_{ist}$) du côté à tension alternative du module onduleur (4) se situe en-dessous d'une valeur pouvant être prédéterminée et/ou la valeur de puissance réactive ($Q_{ist}$) correspond sensiblement à une valeur nominale de puissance réactive ($Q_{soll}$),

le signal de commutation de redresseur ($S_G$) est bloqué afin de mettre hors circuit les commutateurs à semi-conducteurs de puissance commandables du module redresseur (2).

2. Procédé selon la revendication 1, **caractérisé en ce que** le blocage du signal de commutation de redresseur ($S_G$) est effectué après un intervalle de temps réglable.

7

**3.** Procédé selon la revendication 1 ou 2, **caractérisé en ce que**, dans le cas où, en outre,

(f) une valeur nominale de puissance effective ($P_{soll}$) se situe en-dessous d'une valeur pouvant être prédéterminée, le signal de commutation de redresseur ($S_G$) est bloqué afin de mettre hors circuit les commutateurs à semi-conducteurs de puissance commandables du module redresseur (2).

**4.** Procédé selon l'une quelconque des revendications 1 à 3, **caractérisé en ce que**, dans le cas où, en outre,

(g) la valeur de puissance réactive ($Q_{ist}$) se situe en-dessous d'une valeur pouvant être prédéterminée,

le signal de commutation de redresseur ($S_G$) est bloqué afin de mettre hors circuit les commutateurs à semi-conducteurs de puissance commandables du module redresseur (2).

Fig. 1

EP 2 831 991 B1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2214302 A2
- US 20080031024 A